# EUROPÄISCHE PATENTANMELDUNG

(11) **EP 4 804 099 A1**
(43) Veröffentlichungstag der Anmeldung: **09.09.2026**
(21) Anmeldenummer: 25162385.6
(22) Anmeldetag: 07.03.2025
(51) Int. Cl.: G06Q 20/14, H04L 12/14, H04M 15/00

(54) **VERFAHREN ZUR VERGEBÜHRUNGSDATENERSTELLUNG ZUR VERGEBÜHRUNG VON ZUMINDEST EINES SEITENS EINES SERVERS ZUMINDEST EINEM CLIENT ZUMINDEST FÜR EINEN ERSTEN ZEITRAUM BEREITGESTELLTEN SO GENANNTEN APPLICATION PROGRAMMING INTERFACE, API -, FUNKTION, SEVER- UND CLIENTEINRICHTUNG**

(71) Anmelder: Siemens Aktiengesellschaft, 80333 München (DE)
(72) Erfinder: Weiss, Johannes, 96170 Lisberg (DE)
(74) Vertreter: Siemens Patent Attorneys

(57) **Zusammenfassung**

Die Erfindung betrifft ein Verfahren zur automatischen Vergebührungsdatenerstellung zur Vergebührung von zumindest einer seitens eines Servers zumindest einem Client zumindest für einen ersten Zeitraum bereitgestellten so genannten "Application Programming Interface, "API"-, Funktion, bei der sowohl auf Seiten des Servers als auch auf Seiten des Clients jeder Zeitraum einer erfolgreichen Bereitstellung der API derart durch Datenaustausch zwischen Server und Client erfasst wird, dass auf Grundlage des Datenaustausches zwischen Server und Client bei jedem neuen Zeitraum der Server einen ersten Datensatz derart strukturiert speichert und der Client einen zweiten Datensatz derart strukturiert speichert, dass sowohl für den Server anhand des ersten Datensatzes als auch für den Client anhand des zweiten Datensatzes die gleichen mit der erfolgreichen Bereitstellung zumindest korrelierende, insbesondere vergebührungsrelevante, Parameter ableitbar sind, wobei die Gesamtheit beim jeweiligen Datenaustausch ausgetauschter Daten einer Untermenge der Gesamtheit der mit erfolgreichen Bereitstellung zumindest korrelierenden Parameter entspricht. Ferner betrifft die Erfindung eine Client- und Servereinrichtung zur Durchführung des Verfahrens.

## Beschreibung

Die Erfindung betrifft ein Verfahren zur Vergebührungsdatenerstellung zur Vergebührung von zumindest eines seitens eines Servers zumindest einem Client zumindest für einen ersten Zeitraum bereitgestellten so genannten "Application Programming Interface, "API"-, Funktion, gemäß dem Oberbegriff des Anspruchs 1, eine Servereinrichtung, gemäß Gattungsbegriff des Anspruchs 16 sowie eine Clienteinrichtung gemäß dem Gattungsbegriff des Anspruchs 17.

Die Nutzung von so genannten "Application Programming Interfaces", APIs, um technische Funktionalitäten und Daten zwischen Systemen oder Anwendungen bereitzustellen und zu integrieren, ist bekannt. APls dienen dabei als Schnittstellen, die den Austausch und die Automatisierung von Prozessen ermöglichen. Beispielsweise Integration: APls ermöglichen die Verbindung zwischen unterschiedlichen Systemen und Plattformen, z. B. zur Datenübertragung oder Funktionsausführung.
1. Automatisierung: Prozesse wie Datensynchronisation oder Workflows können durch APls effizient automatisiert werden.
2. Standardisierung: APls bieten standardisierte Protokolle (z. B. REST, SOAP, GraphQL), die die Interoperabilität zwischen Systemen erleichtern.
3. Erweiterbarkeit: APls schaffen eine modulare Struktur, die es ermöglicht, neue Funktionen oder Dienste einfach in bestehende Systeme einzubinden.

Es ist ferner bekannt, dass API-Funktionalitäten im Rahmen eines API-Business angeboten und genutzt werden. Unter "API-Business" wird verstanden, dass ein Server eine Schnittstelle (API) anbietet, die von Clients benutzt werden kann. Jeder Aufruf der Schnittstelle durch den Client kann in Rechnung gestellt werden.

Eine technische Aufgabe im API-Business ist es eine akkurate automatische Erfassung abrechnungsrelevanter Aufrufe der Schnittstelle durch den oder die Clients bereitzustellen. Dabei besteht das Problem für eine Abrechnungsrelevanz erfolgreiche Aufrufe zu detektieren und zu erfassen. Ferner müssen die abrechnungsrelevanten Ereignisse derart strukturiert, als Daten hinterlegt werden, dass sie sowohl für den jeweiligen die Schnittstelle nutzenden Client als auch je Client getrennt abgerufen bzw. dargestellt werden können. Dies hat den Vorteil der Nachvollziehbarkeit.

Gemäß dem Stand der Technik ist es so, dass der Server über die abrechnungsrelevanten strukturiert abgelegten Daten verfügt und somit die Kontrolle darüber hat, welcher Client in welchem Umfang erfolgreiche API-Aufrufe getätigt hat. Der Server kann grundsätzlich all seine erfassten und strukturiert abgelegten Daten dem Client zwar zur Verfügung stellen, der Client muss aber darauf vertrauen, dass die vom Server bereitgestellten Daten akkurat sind bzw. nicht manipuliert wurden. Denn es besteht die Möglichkeit die Daten, beispielsweise bei ihrer Übertragung, zu kompromittieren. Ferner führen solche Übertragungen auch zu einer vermeidbaren Ressourcenbelegung der Kommunikationsverbindung. Der Client kann zwar ebenfalls seine erfolgreichen API-Aufrufe beim Server erfassen und somit für sich Daten anlegen, die eine Auswertung zulassen, welche Aufrufe er getätigt hat, so dass diese für einen Vergleich mit den Daten des Servers zugrunde gelegt werden können. Jedoch muss auch der Server darauf vertrauen, dass diese Daten akkurat und/oder nicht manipuliert sind.

Die der Erfindung zugrundeliegende Aufgabe ist es daher eine Lösung für eine Verifikation von Vergebührungsdaten bei der Nutzung einer Schnittstelle (API) anzugeben, die die Nachteile des Standes der Technik überwindet, insbesondere ein hohes Maß an Akkuratheit, Reliabilität und Reduzierung der Manipulationsmöglichkeiten bei der Vergebührung bietet.

Diese Aufgabe wird ausgehend von dem Verfahren zur automatischen Vergebührungsdatenerstellung zur Vergebührung von zumindest eines seitens eines Servers zumindest einem Client zumindest für einen ersten Zeitraum bereitgestellten so genannten "Application Programming Interface, "API"-, Funktion, gemäß dem Oberbegriff des Anspruchs 1, durch dessen kennzeichnende Merkmale, ausgehend von der Servereinrichtung, gemäß dem Gattungsbegriff des Anspruchs 16, durch dessen Merkmale, sowie durch die Clienteinrichtung gemäß dem Gattungsbegriff des Anspruchs 17, durch dessen Merkmale gelöst.

Bei dem erfindungsgemäßen Verfahren zur automatischen Vergebührungsdatenerstellung zur Vergebührung von zumindest einer seitens eines Servers zumindest einem Client zumindest für einen ersten Zeitraum bereitgestellten so genannten "Application Programming Interface, "API"-, Funktion, wird sowohl auf Seiten des Servers als auch auf Seiten des Clients jeder Zeitraum einer erfolgreichen Bereitstellung der API derart durch Datenaustausch zwischen Server und Client erfasst, dass auf Grundlage des Datenaustausches zwischen Server und Client bei jedem neuen Zeitraum der Server einen ersten Datensatz derart strukturiert speichert und der Client einen zweiten Datensatz derart strukturiert speichert, dass sowohl für den Server anhand des ersten Datensatzes als auch für den Client anhand des zweiten Datensatzes die gleichen mit der erfolgreichen Bereitstellung zumindest korrelierende, insbesondere vergebührungsrelevante, Parameter ableitbar sind, wobei die Gesamtheit beim jeweiligen Datenaustausch ausgetauschter Daten einer Untermenge der Gesamtheit der mit erfolgreichen Bereitstellung zumindest korrelierenden Parameter entspricht.

Die erfindungsgemäße Servereinerichtung und die erfindungsgemäße Clienteinrichtung sind jeweils gekennzeichnet durch Mittel zur Durchführung des Verfahrens zur automatischen Vergebührungsdatenerstellung zur Vergebührung von zumindest einer seitens der Servereinrichtung zumindest einem Client zumindest für einen ersten Zeitraum bereitgestellten so genannten "Application Programming Interface, "API"-, Funktion, und/oder einer seiner Weiterbildungen. Sie weisen jeweils die strukturellen Merkmale auf, die für die Realisierung der gemäß des erfindungsgemäßen Verfahrens und/oder seiner Weiterbildungen definierten Schritten Server- und/oder Client-seitig notwendig sind. Dabei können diese strukturellen Merkmale disjunkt aber auch auf beiden Einrichtungen gleichermaßen implementiert sein, je nachdem, ob der entsprechende Schritt lediglich auf einer oder beiden Seiten erforderlich ist.

Damit besteht der Vorteil der beiden Einrichtungen unter anderem darin, dass sie die Verwirklichung der durch das erfindungsgemäße Verfahren und/oder seiner Weiterbildungen gegebenen Vorteile ermöglichen.

Vorzugsweise wird das erfindungsgemäße Verfahren derart weitergebildet, dass für jeden Zeitraum die Schritte
a) Anfordern der API-Funktionalität
b) Bereitstellen der API-Funktionalität seitens des Servers
c) Erfassen einer erfolgreichen Bereitstellung der API-Funktionalität durch den Datenaustausch durchgeführt werden, wobei bei einer initialen Anforderung der API-Funktionalität im ersten Zeitraum der erste Datensatz und der zweite Datensatz gebildet und strukturiert gespeichert werden und bei jeder einen neuen Zeitraum kennzeichnenden folgenden API Anforderung der erste Datensatz und der zweite Datensatz aktualisiert und strukturiert gespeichert werden, so dass hierdurch gewissermaßen durch den ersten und zweiten Datensatz jeweils ein Kerbholz oder Tally-Stick erzeugt und mit dem strukturieren Speichern initial und folgend Kerben gesetzt werden.

Bei einer weiteren Weiterbildung des erfindungsgemäßen Verfahrens wird für den ersten strukturiert gespeicherten Datensatz und zugehörigem zweiten strukturiert gespeicherten Datensatz eine eindeutige, insbesondere nach dem so genannten "Universally Unique Identifier"-, UUID-, Format erzeugten, ersten Identifizierungsinformation gebildet, wobei die erste Identifizierungsinformation dem ersten strukturiert gespeicherten Datensatz und dem zweiten strukturiert gespeicherten Datensatz zugeordnet gespeichert wird. Hierdurch wird der Bezug bzw. die Zuordnung der Vergebührungsdaten zum Client ermöglicht, so dass jeder Client eine eineindeutige Identität bekommt. Ferner ermöglicht die Identifizierungsinformation im Rahmen des erfindungsgemäßen Verfahrens eine zusätzliche Basis für die Überprüfung, ob es sich um einen neuen Tally-Stick handelt bzw. ob die die Vergebührungsdaten nicht schon unter einer gleichen UUID vorhanden sind.

Alternativ oder ergänzend kann das erfindungsgemäße Verfahren derart weitergebildet werden, dass bei dem Datenaustausch mit dem ersten Datensatz und/oder zweiten Datensatz zumindest korrelierende Nachrichten zwischen dem Server und dem Client derart ausgetauscht werden, dass für zumindest Teile der in den Nachrichten enthaltenen Informationselemente mit einem asynchronen Verschlüsselungsverfahren, insbesondere dem so genannten "Rivest, Shamir und Adleman"-, RSA-, Verfahren, seitens des Client verschlüsselt werden. Dies sichert den erfindungsgemäßen Ansatz vor Manipulation bzw. unberechtigten Eingriffen.

Vorzugsweise kann das erfindungsgemäße Verfahren derart weitergebildet werden, dass durch den Client für jeden neu gebildeten zweiten strukturiert gespeicherten Datensatz ein neues Schlüsselpaar gemäß dem asynchronen Verschlüsselungsverfahren gebildet wird. Dies unterstützt den in der Regel gegebenen Fall, dass ein Client mehrere APl-Funktionalitäten nutzt. Zum einen wird dadurch die Sicherheit weiter erhöht, weil im Fall, dass ein Schlüsselpaar kompromittiert wird, dies nicht gleich alle Vergebührungen kompromittiert. Ferner erlaubt es auf dem Client auch eine individuelle Zuordnung der Zugriffsmöglichkeit bei der Vergebührung.

Alternativ oder ergänzend kann das erfindungsgemäße Verfahren derart weitergebildet sein, dass die ersten strukturierten Datensätze und/oder zweiten strukturierten Datensätze derart strukturiert gespeichert werden, dass mit dem ersten strukturierten Datensatz und/oder zweiten strukturierten Datensatz ein zumindest mit einem Zeitbereich korrelierender Wert strukturiert gespeichert wird. Hierdurch wird es beispielsweise möglich eine Abrechnungsperiode festzulegen, in der die API-Funktionalität genutzt und gemäß einem Vergebührungsvereinbarung vergebührt werden soll.

Vorzugsweise wird das erfindungsgemäße derart weitergebildet werden, dass die ersten strukturierten Datensätze und/oder zweiten strukturierten Datensätze derart strukturiert gespeichert werden, dass mit dem ersten strukturierten Datensatz und/oder zweiten strukturierten Datensatz zumindest ein aus einer zweiten Identifikationsinformation und einer Vergebührungsinformation gebildetes Datenpaar, derart strukturiert gespeichert wird, dass jedes weitere aus einer zweiten Identifikationsinformation und einer Vergebührungsinformation gebildete Paar, als Eintrag einer Liste von aus zweiten Identifikationsinformation und einer Vergebührungsinformation gebildeten Datenpaaren, strukturiert abrufbar gespeichert wird. Dies ist eine einfache Realisierungsmöglichkeit für die Kerben, die durch ein solches Paar gegeben sind und aufgrund der Identifikationsinformation eine automatische in Verbindung mit der Vergebührungsinformation beidseitige automatische Validierungsmöglichkeit der zumindest teilweise ebenfalls automatisch möglichen Vergebührung erlauben.

Vorzugsweise kann das erfindungsgemäße Verfahren derart weitergebildet werden, dass die Vergebührungsinformation von einer die Vergütungsparameter vorgebenden Einrichtung, beispielsweise, insbesondere dem die API-Funktion bereitstellenden, Server, bezogen wird. Diese definierte Quelle erhöht die Transparenz und bietet, wenn es durch den Server realisiert ist, eine einfache Implementierung. Wird es durch eine separate dritte Einrichtung zur Verfügung gestellt, kann man beispielsweise Freiheitsgrade derart bereitstellen, dass durch diverse Server zur Verfügung gestellten API-Funktionalitäten durch eine zentrale vorgebende Einrichtung die Vergebührungsinformation vorgegeben wird. So eine Zentralisierung kann auch eine zusätzliche Sicherheitsstufe zum Schutz vor Kompromittierung realisieren.

Vorzugsweise wird das erfindungsgemäße Verfahren derart weitegebildet, dass die erste Nachricht zum Aufruf der API-Funktionalität derart gebildet wird, dass ein Token, insbesondere in der Kopfzeile, der Nachricht zum Aufruf der API-Funktionalität übertragen wird. Dieser Token stellt gewissermaßen eine einfache Realisierung des Einkerbens beider Kerbhölzer (Tally-Sticks) dar, welcher bei minimalen Ressourcenverbrauch und minimalem Transport und Offenlegen von Daten die Implementierung des Tally-Stick Ansatzes gemäß Erfindung erlaubt.

Verfahren nach einem der vorhergehenden Ansprüche, dadurch gekennzeichnet, dass der Token derart gebildet wird, dass er zumindest die erste Identifikationsinformation, den öffentlichen Schlüssel des Clients, den mit dem Zeitbereich zumindest korrelierenden Wert, sowie eine für den durch die zweite Identifikationsinformation bestimmten Eintrag folgenden Eintrag identifizierende gebildete dritte Identifikationsinformation enthält. Hierdurch wird ein minimaler, also ressourcenschonender, sowie ebenfalls auf das Notwendige reduzierte Sicherung aufweisender Austausch realisiert. Auf das Notwendige reduziert, da mit dem öffentlichen Schlüssel lediglich die Antworten des Servers auf Bereitstellungsanfragen verschlüsselt werden, da erfindungsgemäß die Anfragen auf eine derartige Verschlüsselung verzichten können.

Dieser Vorteil ergibt sich insbesondere im Zusammenspiel der Weiterbildung des erfindungsgemäßen Verfahrens bei der die zweite Nachricht zur Beantwortung des Aufrufs der API-Funktionalität derart gebildet wird, dass der zweiten Nachricht die zur ersten Identifikationsinformation zugehörige Vergebührungsinformation und die dritte Identifikationsinformation, insbesondere als Antwort-Token, beigefügt wird, wobei die zweite Nachricht durch den Server mit dem öffentlichen Schlüssel des Client verschlüsselt an den Client übertragen wird.

Eine vorteilhafte einfache Realisierung des erfindungsgemäßen Verfahrens ist gegeben, wenn das erfindungsgemäße Verfahren derart weitergebildet wird, dass zum ersten Zeitpunkt mit der Anfrage durch den Client
a) der zweiten Datensatz erstellt,
b) die erste Identifizierungsinformation gebildet,
c) als zweite Identifikationsinformation eine den ersten Zeitraum kennzeichnende ID durch einer jeden ersten Zeitraum zugeordneten Information, insbesondere dem Wert "0", gesetzt,
d) ein Schlüsselpaar gemäß dem asynchronen Verschlüsselungsverfahren gebildet,
e) der zumindest mit dem Zeitbereich korrelierende Wert bestimmt, und/oder
f) der Token erzeugt wird,
g) die erste Nachricht auf Grundlage den zumindest einem der Schritte a) bis f) gebildet und an den Server übertragen wird, und mit der Bereitstellung durch den Server
h) der Token aus der Nachricht extrahiert,
i) der zweite Datensatz erstellt wird,
j) auf Grundlage des mit dem Zeitbereich korrelierenden Wertes, insbesondere als Credits speicherbare, für die bereitgestellte API-Funktionalität ermittelten, Kosteninformation erstellt,
k) eine den nächsten Zeitraum kennzeichnende ID generiert,
l) die Kosteninformation und die den Zeitraum kennzeichnende ID im ersten Datensatz strukturiert gespeichert, und/oder
m) der Antwort-Token erzeugt wird,
m) die zweite Nachricht auf Grundlage zumindest einer der Schritte h) bis I) erzeugt und mit dem öffentlichen Schlüssel des Schlüsselpaares des Clients verschlüsselt übertragen wird, und die zweite Nachricht vom Client,
n) mit dem privaten Schlüssel des Schlüsselpaares entschlüsselt,
o) die Kosteninformation und die durch den nächsten Zeitraum kennzeichnende ID definierte dritte Identifikationsinformation im zweiten Datensatz strukturiert gespeichert wird.

Dieser Vorteil wird weiter unterstützt, wenn das erfindungsgemäße Verfahren derart weitergebildet wird, dass für jeden dem ersten Zeitraum folgende Bereitstellung der API-Funktionalität des Servers für den Client, mit der weiteren Anfrage nach der API-Funktionalität im Unterschied zu einem der Schritte a) bis f) in den Token für die erste Nachricht, die den nächsten Zeitraum kennzeichnende ID aufgenommen wird.

Wird das erfindungsgemäße Verfahren derart weitergebildet, dass seitens des Servers abhängig von einem ersten Triggerereignis, insbesondere dem Empfang einer dritten, eine vom Client an den Server übermittelte, zumindest die Verifikationsanfrage enthaltende, Nachricht,
a) für den der ersten Identifikationsinformation zugeordneten strukturierten Datensatz einen ersten Hash-Code erzeugt,
b) in einer vierten Nachricht den ersten Hash-Code an den Client übermittelt wird, sowie
c) der Client nach Empfang der vierten Nachricht für den der ersten Identifikationsinformation zugeordneten strukturierten Datensatz einen zweiten Hash-Code erzeugt und den ersten Hash-Code und den zweiten Hash-Code vergleicht und in Abhängigkeit des Vergleichsergebnisses ein zweites Triggerereignis, insbesondere Erzeugen und/oder strukturiertes Speichern einer zumindest mit dem Vergleichsergebnis korrelierenden Validierungsinformation und/oder triggern eines Bezahlprozesses, erzeugt wird, oder derart weitergebildet, dass seitens des Client abhängig von einem dritten Triggerereignis,
   a) ein dritter Hash-Code zu dem der ersten Identifikaitonsinformation zugeordneten zweiten strukturierten Datensatz erzeugt,
   b) eine fünfte, zumindest die erste Identifikationsinformation sowie den dritten Hash-Code enthaltende, Nachricht an den Server übermittelt wird, sowie
   c) der Server auf den Empfang der fünften Nachricht zu dem der ersten Identifikationsinformation zugeordneten ersten strukturierten Datensatz einen vier Hash-Code erzeugt und den dritten Hash-Code und den vergleich Hash-Code vergleicht und in Abhängigkeit des Vergleichsergebnisses ein vierten Triggerereignis, insbesondere Erzeugen und/oder strukturiertes Speichern einer zumindest mit dem Vergleichsergebnis korrelierenden Validierungsinformation und/oder triggern eines Bezahlprozesses, erzeugt wird, wird eine seitens Client und/oder Server angestoßene Möglichkeit zur automatisierten Verifikation bereitgestellt.

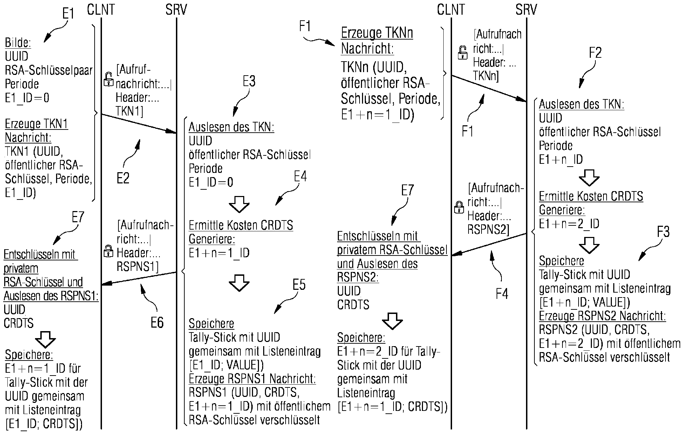

Im Folgenden werden weitere Vorteile und Details der Erfindung sowie Weiterbildungen der Erfindung anhand eines in der einzigen Figur dargestellten Ausführungsbeispiels näher erläutert. Es zeigt die
Figur (FIG) schematisch einen beispielhaften Ablauf des erfindungsgemäßen Verfahrens.

Bei dem im Folgenden in der Figur (FIG) erläuterten Ausführungsbeispiel handelt es sich um eine bevorzugte Ausführungsform anhand dessen Vorteile sowie weiteren Ausführungsformen bzw. Weiterbildungen der Erfindung näher erläutert werden.

Insbesondere zeigen die nachfolgenden Erläuterungen lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis der unabhängigen Ansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

Bei dem Ausführungsbeispiel bzw. den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

In der einzigen Figur FIG ist schematisch als ein erstes Ausführungsbeispiel des erfindungsgemäßen Verfahrens ein Ablaufdiagramm dargestellt, dass Schritte bei der Erstellung eines neuen erfindungsgemäßen Protokolls, welches im Server als auch im Client, der eine durch den Server bereitgestellte API aufruft, dargestellt.

Hierbei handelt es sich also um einen initialen Vorgang, bei dem der Client also die Erzeugung so eines Protokolls initiiert, etwa weil er beispielsweise zu einem initialen Zeitpunkt die API aufruft. Dieser initiale Zeitpunkt kann zum Beispiel dadurch gegeben sein, dass der Client absolut gesehen zum ersten Mal die API aufruft und/oder relativ gesehen, weil er zu einem bestimmten Zeitpunkt sich in einer neuen Abrechnungsperiode bzw. nach dem letzten einer Abrechnung zugrunde gelegten Zeitraum befindet. Einer oder mehrere Trigger für den initialen Vorgang können grundsätzlich alternativ oder ergänzend zu den Beispielen gemäß einer zwischen Server und Client definierten Vorgabe beliebig festgelegt sein.

Gemäß dem erfindungsgemäßen Ausführungsbeispiel wird durch diesen initialen Vorgang sowohl beim Server als auch beim Client ein Protokoll, bei dem jeder Aufruf beidseitig in erfindungsgemäßer Weise zu einem Eintrag führt, angelegt. Es wird also gewissermaßen in beiden Protokollen einem Kerbholz gleich je Aufruf ein erfindungsgemäßer Prozess durchgeführt, der eine für eine auf eine erfindungsgemäße Art durchführbare automatische Validierung auswertbare "Kerbe" hinterlegt, so dass das erfindungsgemäße Protokoll im Folgenden alternativ auch basierend auf dem englischen Begriff für Kerbholz, "Tally-Stick", als Tally-Stick-Protokoll oder "Tally-Stick" bezeichnet wird.

In der Figur FIG ist nun zu erkennen, dass der Ablauf der Erstellung eines neuen Tally-Sticks gemäß Ausführungsbeispiel, welches als computerimplementiertes Verfahren ausgestaltet sein kann, mit einem ersten Erstellungsschritt E1 beginnt, in dem der Client, der beim Server eine API-Funktionalität aufrufen möchte, für das Protokoll, also den Tally-Stick, eine erste den Tally-Stick identifizierende ID sowie ein Schlüsselpaar für eine asynchrone Verschlüsselung generiert. Ferner wird in diesem ersten Erstellungsschritt ein Wert, der mit einer, beispielsweise gemäß einer Vergütungspolicy vereinbarten, Abrechnungsperiode korreliert oder direkt wiedergibt, sowie eine zweite den Eintrag, (engl. Entry) identifizierende ID festgelegt.

Die erste ID wird gemäß einem Verfahren zur Erzeugung einer eindeutigen Kennung in einem dem Verfahren entsprechenden Format festgelegt. Im Ausführungsbeispiel erfolgt dies beispielsweise gemäß dem so genannten "Universally Unique Identifier"-, UUID-Format

Diese zweite ID hat aufgrund der Tatsache, dass es sich um die Initialisierung des Protokolls handelt, die Besonderheit, dass diese erste initiale Entry-ID gemäß Ausführungsbeispiels immer den Wert "0" hat. Alternativ oder ergänzend kann die Kennzeichnung, dass es sich um die initiale Tally-Stick Erzeugung handelt, auch durch ein äquivalentes eindeutig die Initialisierung anzeigenden Wert für Entry-ID erfolgen.

In einem zweiten Erstellungsschritt E2 ruft der Client nun die Schnittstelle am Server, also die durch den Server bereitgestellte API-Funktionalität, auf und übergibt in der hierzu genutzten Nachricht, vorzugsweise der Kopfzeile (Header) der Nachricht, einen Token, auch als Tally-Stick-Token bezeichnet, an den Server.

Dieser Token wird seitens des Clients so gebildet, dass er den Wert der ersten ID im UUID-Format, den initialen Aufruf kennzeichnenden Wert "0" als Wert der zweiten ID, die für die Entry-ID vorgesehen ist, den Wert des öffentlichen Schlüssels sowie der Wert der Abrechnungsperiode enthält. Der Aufbau des Tokens ist erfindungsgemäß so gestaltet, dass mindestens die genannten Werte enthalten sind und allen Clients und Servern, die das erfindungsgemäße Verfahren implementieren bekannt, so dass die Inhalte dem bekannten Aufbau folgend ausgelesen werden können.

In einem dritten Erstellungsschritt E3 wertet der Server die Nachricht, vorzugsweise die Kopfzeile, aus, und erkennt den Token sowie die Tatsache, dass es sich um einen neuen Tally-Stick, also einen initialen Vorgang handelt, bei dem der Client einen neuen Tally-Stick verwendet, durch die Auswertung der Entry-ID, die den Wert "0" liefert, welcher eben kennzeichnet, dass es ein neuer Tally-Stick ist, der gerade seitens des Client angelegt worden ist.

In diesem dritte Erstellungsschritt E3 kann als vorteilhafte Weiterbildung des Ausführungsbeispiels der Erfindung durch den Server auch geprüft werden, ob er nicht schon zufällig einen Tally-Stick mit gleicher UUID kennt - falls ja, wird eine Fehlerbehandlungsprozedur gestartet, bei der beispielsweise die Anfrage abgebrochen und/oder weitere Schritte, wie beispielsweise die Anforderung einer korrigierten UUID oder einfach Ablehnung des Aufrufs der API-Aufrufs zur Folge haben, die mit einem neuen Versuch und somit neuer UUID dann aufgehoben wird.

Ist die UUID unbekannt, also neu, legt der Server gemäß Ausführungsbeispiel des erfindungsgemäßen Verfahrens für sich ebenfalls einen Tally-Stick mit dieser UUID an. Gleichzeitig setzt der Server den für sich erzeugten Tally-Stick mit gegebener UUID, beispielsweise durch als zum Client zugehörig gekennzeichnet abgespeichert, in Bezug zu einem üblicherweise mit dem Server für den Aufruf von API-Funktionalitäten ebenfalls ausgetauschten Authentifizierungstoken des Clients, so dass damit sichergestellt ist, dass es sich um einen Tally-Stick handelt, der zu einem authentifizierbaren Client gehört. In anderen Worten, es wird das Authentifizierungstoken benutzt, um auf die dem Server bekannte bzw. genutzte digitale ID des Clients zu schließen und unter dieser digitalen ID wird der neue Tally-Stick mitgeführt.

Nach Abschluss dieser Aktionen des dritten Erstellungsschritts E3 bereitet der Server die Beantwortung der Anfrage des Clients, also den Aufruf der API-Funktionalität, in einem vierten Schritt E4 vor und errechnet hierzu die Kosten für diesen Aufruf. Diese Errechnung kann auf Basis von gemäß gemeinsam akzeptierten Verrechnungspolicy bestimmten Parametern erfolgen, so dass deren Werte der Serverantwort als mit "Credits" bezeichnetem Wert/Werte beifügt. Ferner wird zum Beifügen in die Antwort eine neue Entry-ID generiert, die der Client als nächstes verwenden soll.

Beim nun folgenden fünften Erstellungsschritt E5 speichert der Server in seiner Version des Tally-Sticks die errechneten Credits unter der Entry-ID 0 strukturiert ab und sendet nun in einem sechsten Erstellungsschritt E6 die Antwort auf die Anfrage vom Client zurück und übermittelt in der hierzu genutzten Nachricht, vorzugsweise deren Kopfzeile (Header), einen als Tally-Stick-Token-Response bezeichenbare Antwort. Der Server fügt dieser Nachricht die errechneten Credits und einen Wert einer Entry-ID zu, die der Client beim nächsten Aufruf als Entry-ID nutzt. Dem initialen Aufruf folgende Aufrufe erfolgen also gemäß dem Ausführungsbeispiel der Erfindung stets mit einem seitens des Servers als Response an den Client übermittelten Entry-ID. Der Server übermittelt den Tally-Stick-Token-Response kryptografisch geschützt. Der Response ist dazu mit dem öffentlichen Schlüssel des Clients verschlüsselt, der dem Server durch den Aufruf bekannt gemacht worden ist.

Die den Tally-Stick-Token des Aufrufs enthaltende Nachricht muss im Übrigen gemäß erfindungsgemäßem Ausführungsbeispiel nicht verschlüsselt werden. Es genügt eine dem Übertragungsprotokoll, beispielsweise dem HTTPS-Protokoll, inhärente Transportverschlüsselung.

In einem siebten Erstellungsschritt E7 entschlüsselt der Client mit seinem privaten Schlüssel den empfangenen Tally-Stick-Token-Response und speichert für sich die Credits in der Entry-ID 0 der initialen Anfrage und merkt sich, vorzugsweise durch strukturiertes Speichern, die seitens des Servers angegebene Entry-ID für den nächsten Aufruf vor.

In der Figur ist ferner zu erkennen, wie gemäß Ausführungsbeispiel der Erfindung weiterführende Aufrufe behandelt werden.

Zu erkennen ist, dass in einem ersten Fortsetzungsschritt F1 der Client die Schnittstelle, also die API-Funktionalität, am Server aufruft, in dem er mittels einer Nachricht, vorzugsweise deren Kopfzeile (Header), einen neuen Tally-Stick-Token an den Server übergibt. Dieses Token enthält nun nicht den Wert "0", als Entry-ID, sondern es wird als Wert der Wert, die Nummer, die der Server bei der Antwort zur letzten Anfrage dem Client mitgeteilt hat. Die restlichen Elemente des Tokens werden wie beim initialen Vorgang angegeben gebildet und mit der Aufrufnachricht, übertragen, wobei auch diese Nachricht wie die Übrigen ausgetauschten Nachrichten hier die UUID des Tally-Sticks enthalten, so dass auf der jeweiligen Seite (Server oder Client) der Tally-Stick identifiziert werden kann, so dass er auf beiden Seiten basierend auf den Nachrichten fortgeschrieben werden kann.

In einem zweiten Fortsetzungsschritt F2 bereitet der Server die Beantwortung des Aufrufs vor und errechnet auf Grundlage des mit dem Aufruf empfangenen Token die Credits und erzeugt eine neue Entry-ID, so dass beides in einem dritten Fortsetzungsschritt F3 seitens des Server entsprechend in seiner Version des Tally-Sticks, also wie im Initialvorgang strukturiert dem Client zugeordnet ab und übermittelt in einem vierten Fortsetzungsschritt F4 die neuen Credits und die neue, für einen erneuten Aufruf vorgegebene, Entry-ID mittels Tally-Stick-Response zurück an den Client.

Nach Empfang und Auslesen der Nachricht speichert der Client in einem fünften Fortsetzungsschritt F5 die in der Response erhaltenen Werte entsprechend strukturiert in seiner Version des Tally-Sticks, und merkt sich für die nächste Anfrage die vorgegebene Entry-ID.

Die Fortsetzungsschritte F1... F5 wiederholen sich für jeden weiteren Aufruf der API-Funktionalität bei diesem Server seitens dieses Clients. Aufrufe durch einen anderen Client werden initial und in Fortsetzung genauso ablaufen, sind serverseitig durch das strukturierte Speichern und/oder Zuordnung zur digitalen ID des Client unterscheidbar.

Die Fortsetzungsschritte F1... F5 können dabei beliebig oft wiederholt werden bis beispielsweise eine Abbruchbedingung vorliegt. Das kann beispielsweise das Erreichen des Endes der Abrechnungsperiode sein, das Auflösen eines bestimmten Abrechnungszenarios und/oder ein anderes Triggerereignis sein, welches dazu führt, dass seitens des Clienten ein neuer Tally-Stick für einen Aufruf bei dem Server initialisiert werden muss.

Eine Abbruchbedingung kann alternativ oder ergänzend auch ein negatives Ergebnis einer Überprüfung des durch Server und Client geführten Protokolls also des jeweils strukturiert gespeicherten Tally-Sticks sein, wobei so eine Überprüfung gemäß einer Weiterbildung des erfindungsgemäßen Verfahrens jederzeit von einer und/oder beiden Seiten initiiert werden kann.

Alternativ oder ergänzend ist es denkbar, dass die Überprüfung laufend, beispielsweise nach jedem Aufruf oder ressourcenschonend in diskreten Abständen erfolgt.

Die Überprüfung des Protokolls ist in der Figur FIG nicht dargestellt, kann nach einer Ausführungsform des erfindungsgemäßen Verfahrens dabei folgendermaßen erfolgen:
- Bei Initiierung einer Prüfung des Protokolls (Tally-Stick) wird ein Hash-Code über das gesamte Protokoll erstellt.
- Der Hash-code beinhaltet alle Informationen des Protokolls, also des gespeicherten Tally-Sticks - auch die eindeutige ID und den öffentlichen Schlüssel des Clients, so dass sichergestellt ist, dass kein anderer Tally-Stick (Protokoll) jemals den gleichen Hash-Code zur Folge haben kann - auch dann nicht, wenn es zwei Tally-Sticks mit gleicher Aufrufcharakteristik vom gleichen Client gibt.

Zur Validierung des Protokolls sind erfindungsgemäß je nachdem welche Seite diese Validierung initiieren möchte zwei Varianten vorgesehen Damit beide Seiten abgesichert sind, dass die Gegenseite jeweils identische Protokolle verwendet, werden in der Regel beide genutzt werden, da dann und nur dann beide Seiten die Kenntnis über die Übereinstimmung selbst bestimmt haben. Möglich ist grundsätzlich auch, dass nur eine der Varianten genutzt wird, beispielsweise als Zwischenvalidierung und/oder Anscheinsbeweis/-indiz und/oder als Triggerereignis für andere Prozesse.

Variante A) Client führt die Validierung mittels Hash-Code, den der Server von seinem Tally-Stick erstellt hat, durch und vergleicht ihn mit dem Hash-Code seines Tally-Sticks (in diesem Falle weiß der Client, dass die Protokolle identisch sind, der Server nicht). Folgende Schritte erfolgen hierzu gemäß eines Ausführungsbeispiels der Erfindung;
1. Der Client übermittelt dem Server eine Anfrage darüber, welchen Hash-Code sein Tally-Stick mit der den Tally-Stick identifizierenden UUID, die ebenfalls übermittelt wird, hat.
2. Der Server errechnet den Hash-Code und gibt ihn an den Client zurück.
3. Der Client errechnet seinen Hash-Code und vergleicht die beiden Hash-Codes. Sind sie identisch, ist das Protokoll auf beiden Seiten identisch und seitens des Clients liegt die Validierungsinformation und/oder das Triggerereignis zur Abwicklung der Bezahlung vor.

Variante B) Server führt die Validierung mittels Hash-Codes, den der Client von dem seitens des Clients gespeicherten Tally-Stick erstellt hat, durch, und vergleicht ihn mit dem Hash-Code (in diesem Falle weiß der Server, dass die Protokolle identisch sind, der Client nicht). Folgende Schritte erfolgen hierzu gemäß eines Ausführungsbeispiels der Erfindung;
1. Der Client errechnet seinen Hash-Code des Protokolls und übergibt ihn mit der UUID des Tally-Sticks an den Server
2. Der Server errechnet den Hash-Code zum Tally-Stick mit der gegebenen UUID.
3. Der Server vergleicht die beiden Hash-Codes und gibt das Ergebnis (wahr oder falsch) an den Client zurück, so dass dieser für sich weitere Schritte, beispielsweise die Durchführung der Bezahlung, auslösen kann.

Die Abrechnung der Credits kann gemäß einem Ausführungsbeispiel des erfindungsgemäßen Verfahrens derart erfolgen, dass der Server, beispielsweise bei Erreichen eines Triggerereignisses, wie dem Ablauf der Abrechnungsperiode und/oder anderen oben angeführten Ereignissen, dem Client eine Rechnung stellt, in dem er alle Credits eines Tally-Sticks zusammenzählt und in den entsprechenden Betrag der Abrechnungswährung übersetzt (anhand von den vertraglich festgelegten Umrechnungsfaktoren). Auf der Rechnung ist die UUID des Tally-Sticks vermerkt, so dass die Überprüfung auf mittels einer der Varianten A und B oder beiden erfolgen und bei positivem Ergebnis die Zahlung veranlasst bzw. durchgeführt werden kann.

Wie deutlich zu erkennen ist, ermöglicht das erfindungsgemäße Verfahren das Erzeugen validierbarer Verrechnungsdaten bzw. realisiert dies durch eine Weiterbildung, wobei diese Daten durch die ausgeklügelte Verwendung und Verteilung von Informationen und Schlüsseln sowie Verwendung der Schlüssel mittels Token einerseits vor Manipulationen gesichert sind, andererseits beide Seiten ohne jemals alle Inhalte eines Protokolls auf einmal austauschen zu müssen, eine Validierung durchführen können. Die Erfindung ermöglicht und realisiert in einer Weiterbildung somit auch eine automatisierte Validierung und Verrechnung bzw. Ausgleich der Rechnung, da bei einer einfachen Ausführungsform der automatisierten Abrechnung und Zahlung die Validierung durch Vernetzung ohne Eingriff eines Menschen durchführen können. Lediglich bei Fehlern/Konflikten kann eine entsprechende Fehlerprozedur getriggert werden, die einen menschlichen Eingriff zur Auflösung des Konflikts bzw. Untersuchung und Behebung des Fehlers zur Folge haben.

Der Client kann, wie oben angemerkt, dabei zu jeder Zeit hergehen und mit dem Verfahren "Überprüfung des Protokolls" feststellen, ob der Server genau jene Anzahl an Credits in Rechnung gestellt hat, die der Client bereits kennt (weil die Tally-Sticks identisch sind und die Credits pro Entry-ID fließen in die Berechnung des Hash-Codes mit ein). Stimmen die Hash-Codes nicht überein, kann der Client die Rechnung, insbesondere frühzeitig, ablehnen.

Die Auflösung eines Konflikts, wenn die Abrechnung nicht stimmt, ist nur insoweit Gegenstand der Weiterbildungen der Erfindung, als dass es eine Fehlerbehebungs-/Konfliktlösungsprozedur, beispielsweise durch Ausgabe eines Hinweises/Alarms an einen Operator auslöst. Allerdings liegt eben einer der Vorteile der Erfindung darin, dass der Client dann seine Version des Protokolls (Tally-Stick) für weitere Klärungen verwenden kann.

Gemäß einer weiteren vorteilhaften Ausgestaltung wird der Wert der Abrechnungsperiode des Tally-Sticks klein gewählt oder in kleine Untereinheiten mit entsprechender Anzahl Tally-Sticks aufgeteilt, damit Fehler-/Konflikte frühzeitig behandelt werden können und somit Abrechnungsschwierigkeiten bei technischen Fehlern keine größeren Geschäftseinflüsse haben. Alternativ oder ergänzendes regelmäßiges Überprüfen, das wie oben angegeben laufen, beispielsweise in diskreten Abstand erfolgt, wirkt sich diesbezüglich gleichermaßen positiv auf.

An dieser Stelle seien die Elemente sowie einzelne Wirkungen und Vorteile des Ausführungsbeispiels des erfindungsgemäßen Verfahrens nochmals in teils anderen Worten zusammengefasst:
Die Erfindung bewirkt, dass es im Grunde ein gemeinsames Protokoll (gebildet aus dem serverseitig und clientseitig erzeugten und gespeicherten Tally-Stick) zwischen Client und Server gibt, an dem beide Seiten interaktiv mitwirken, so dass hierdurch zugleich on the fly auf beiden Seiten die erbrachte Leistung und die Kosten validierbar hinterlegt sind. Beide Seiten können dies für sich oder gemeinsam nutzen: Mit dem Protokoll kann der Client nachweisen, welche Aufrufe der Server erfolgreich beantwortet hat. Das Protokoll kann vom Server verwendet werden, um eine genaue Abrechnung zu erstellen.

Ein weiterer Vorteil der Erfindung ist, dass das Protokoll zwischen Client und Server niemals komplett übermittelt wird. Zum Fortschreiben des Protokolls werden lediglich die erfindungsgemäßen Token (Tally-Stick-Tokens) zwischen Client und Server übermittelt, mit denen der Client und der Server jeweils unabhängig das Protokoll fortschreiben können.

Ein dritter Vorteil besteht darin ist, dass die Kommunikation zwischen Client und Server nicht verfälscht oder von unberechtigten Dritten nachvollzogen werden kann. Mit der Erfindung ist es nicht möglich, dass ein Client B sich als Client A ausgibt. Auch ist es nicht möglich, dass Client B die Kosten von Client A verfolgen kann.

Schließlich ist ein weiterer Vorteil, dass jederzeit geprüft werden kann, ob die Protokolle von Client und Server identisch sind, ohne dass diese übertragen werden müssen.

Das Ausführungsbeispiel des erfindungsgemäßen Verfahrens erreicht dies u. a. durch die folgenden Merkmale und Verfahrensweisen einzeln und/oder in Kombination:
Das erfindungsgemäße Protokoll ist gegeben durch einen serverseitigen und einen clientseitigen Tally-Stick und besteht aus folgenden Elementen:
Tally-Stick-ID:
Eine eindeutige Kennzeichnung des Protokolls (Tally-Stick), bspw. durch eine UUID Öffentlicher Schlüssel des Clients:
Der öffentliche Schlüssel des Clients aus einem asynchronem Verschlüsselungsverfahren, beispielsweise RSA. Der Client behält den privaten Schlüssel für sich und gibt ihn nie preis. Das Schlüsselpaar wird vom Client selbst für jeden neuen Tally-Stick neu erzeugt.

### Abrechnungsperiode:

Die Abrechnungsperiode gibt an, für welchen Abrechnungszeitraum das Protokoll (Tally-Stick) gefüllt wird. Beispielsweise kann es den Wert "März 2024" enthalten. Es ist auch denkbar, dass für unterschiedliche Anwendungsszenarien mehrere Protokolle (Tally-Sticks) pro Periode vom Client verwendet werden (z.B. "März 2024; Szenario A" und "März 2024; Szenario B"),

### Liste von Entries:

Nach Initialisierungsschritte E1... E5 und verschiedenen Durchläufen der Fortsetzungsschritte F1... F5 entsteht eine - den Kerben eines Kerbholzes vergleichbare - Liste, welche aus einer eine Liste von Entry-ID und Value Paaren besteht. Die Entry-ID selbst ist dabei eine in der Liste eindeutige Nummer und der Value (Wert) eine Anzahl an Credits, die vom Server festgelegt wird.

### Tally-Stick-Token

Ein Tally-Stick-Token wird vorzugsweise in der Kopfzeile (Header) eines Aufrufs zur Schnittstelle, d. h. der entsprechend dem/den Kommunikationsprotokoll/en gebildeten Nachricht, am Server mit übertragen. Das Tally-Stick-Token enthält die ID des Tally-Sticks, den öffentlichen Schlüssel des Clients, die Abrechnungsperiode und die initiale Entry-ID mit dem Wert "0" oder die der initialen Entry-ID folgenden mit individuellen Werten belegte Entry-ID

Das Tally-Stick-Token selbst muss nicht verschlüsselt werden. Durch die Transportverschlüsselung des unterliegenden Protokolls (z.B. HTTPS) ist automatisch sichergestellt, dass mit dem richtigen Server kommuniziert wird.

### Tally-Stick-Token-Response

Die Tally-Stick-Token-Response enthält die Anzahl der Credits für die Entry-ID und die nächste zu benutzende Entry-ID Nummer. Der Client speichert die vom Server angegebenen Credits für den Aufruf in die zum Aufruf gehörenden Entry-ID in der Liste der Entry-IDs ab. Der Client benutzt für den nächsten Aufruf der Schnittstelle die vom Server bereitgestellte Entry-ID Nummer.

Die Tally-Stick-Token-Response wird mit dem öffentlichen Schlüssel vom Client vom Server verschlüsselt. Damit ist sichergestellt, dass die angegebenen Credits und die nächste zu verwendende Entry-ID am Server bekannt ist und nur der Client mit der originären Anfrage diese Information lesen kann.

### Credits

Mit Credits kann ein Server festlegen, wie "teuer" eine Anfrage war. Wie sich Credits in Euro oder Dollar übersetzen, ist beispielsweise in den "Terms of Use" - also der Vertragsgestaltung - des Servers festgelegt. Das spielt für die technische Lösung der Erfindung auch keine Rolle. Entscheidend ist allein, dass gemäß Erfindung ein Wert der Höhe der Kosten automatisch ermittelt bzw. nachvollzogen/validiert werden kann.

Mit diesen Elementen kann ein in knappen Worten wiedergegebenes Ablaufdiagramm eines Ausführungsbeispiels der Erfindung wie folgt beschrieben werden:
Initialisierung, also erster Aufruf der API-Funktionalität durch den Client bei diesem Server:
1. Client erstellt neuen Tally-Stick
2. Generiere neue ID, Schlüsselpaar und lege Periode fest
3. Lege Entry-ID=0 an
4. Erzeuge Tally-Stick-Token
5. Rufe Schnittstelle am Server auf
6. Übergebe Tally-Stick-Token
7. Server prüft und legt Tally-Stick an, weil er an der Entry-ID=0 erkennt, dass der Client einen neuen Tally-Stick verwendet
8. Berechne Kosten und generiere neue Entry-ID
9. Speichere Credits zur Entry-ID=0 in Server-Version des Tally-Sticks
10. Erzeuge Tally-Stick-Token-Response
11. Verschlüssele Tally-Stick-Token-Response mit öffentlichem Schlüssel des Clients
12. Sende Tally-Stick-Token-Response an den Client
13. Entschlüssele Tally-Stick-Token-Response mit privatem Schlüssel des Clients
14. Speichere Credits zur Entry-ID=0 in Client-Version des Tally-Sticks
15. Merke nächste Entry-ID für nächste Anfrage

### Ende der Initialisierung

Weiter, also der Initialisierung folgende Aufrufe der gleichen API-Funktionalität durch den Client bei dem gleichen Server:
1. Client ruft Schnittstelle am Server auf
2. Übergebe Tally-Stick-Token mit gespeicherter nächster Entry-ID
3. Server beantwortet Anfrage und generiert neue nächste Entry-ID
4. Speichere Credits zur nächsten Entry-ID in Server-Version des Tally-Sticks
5. Sende Credits und neuer nächster Entry-ID an den Client
6. Speichere Credits zur nächsten Entry-ID in Client-Version des Tally-Sticks
7. Merke neue nächste Entry-ID für nächste Anfrage

Die Erfindung ist nicht auf die beschriebenen Ausführungsbeispiele und Weiterbildungen beschränkt. Vielmehr umfasst sie alle durch die Ansprüche definierten Varianten, die durch den Schutzbereich der Ansprüche definiert und beschränkt sind und folgenden Vorteile/Effekte aufweisen:
- Der Client bekommt eine Möglichkeit zur Kontrolle und Überprüfung der Abrechnungsmenge von API-Aufrufen im API-Business.
- Das Protokoll zur Überprüfung muss nicht zwischen Client und Server ausgetauscht werden. Es schreibt sich auf beiden Seiten unabhängig fort.
- Das Protokoll kann zu jeder Zeit auf Gleichheit überprüft werden, ohne es zu zwischen Client und Server zu übertragen.
- Das Protokoll existiert nur als Vertrauensverhältnis zwischen Client und Server. Es kann nicht vorkommen, dass sich Protokolle am Server vermischen (falls doch, fällt es auf, weil es dann nicht mehr identisch zur jeweiligen Client-Version ist).
- Der Client hat eine Überprüfungsmöglichkeit, ob die abgerechneten Schnittstellenaufrufe auch tatsächlich vom Client verursacht wurden.

*Unabhängig vom grammatikalischen Geschlecht eines bestimmten Begriffes sind Personen mit männlicher, weiblicher oder anderer Geschlechteridentität mit umfasst.*

## Patentansprüche

1. Verfahren zur automatischen Vergebührungsdatenerstellung zur Vergebührung von zumindest einer seitens eines Servers zumindest einem Client zumindest für einen ersten Zeitraum bereitgestellten so genannten "Application Programming Interface, "API"-, Funktion, **dadurch gekennzeichnet, dass** sowohl auf Seiten des Servers als auch auf Seiten des Clients jeder Zeitraum einer erfolgreichen Bereitstellung der API derart durch Datenaustausch zwischen Server und Client erfasst wird, dass auf Grundlage des Datenaustausches zwischen Server und Client bei jedem neuen Zeitraum der Server einen ersten Datensatz derart strukturiert speichert und der Client einen zweiten Datensatz derart strukturiert speichert, dass sowohl für den Server anhand des ersten Datensatzes als auch für den Client anhand des zweiten Datensatzes die gleichen mit der erfolgreichen Bereitstellung zumindest korrelierende, insbesondere vergebührungsrelevante, Parameter ableitbar sind, wobei die Gesamtheit beim jeweiligen Datenaustausch ausgetauschter Daten einer Untermenge der Gesamtheit der mit erfolgreichen Bereitstellung zumindest korrelierenden Parameter entspricht.

2. Verfahren nach dem vorhergehenden Anspruch, **dadurch gekennzeichnet, dass** für jeden Zeitraum die Schritte
a) Anfordern der API-Funktionalität
b) Bereitstellen der API-Funktionalität seitens des Servers
c) Erfassen einer erfolgreichen Bereitstellung der API-Funktionalität durch den Datenaustausch durchgeführt werden, wobei bei einer initialen Anforderung der API-Funktionalität im ersten Zeitraum der erste Datensatz und der zweite Datensatz gebildet und strukturiert gespeichert werden und bei jeder einen neuen Zeitraum kennzeichnenden folgenden API Anforderung der erste Datensatz und der zweite Datensatz aktualisiert und strukturiert gespeichert werden.

3. Verfahren nach einem der vorhergehenden Ansprüche, **dadurch gekennzeichnet, dass** für den ersten strukturiert gespeicherten Datensatz und zugehörigem zweiten strukturiert gespeicherten Datensatz eine eindeutige, insbesondere nach dem so genannten "Universally Unique Identifier"-, UUID-, Format erzeugten, ersten Identifizierungsinformation gebildet wird, wobei die erste Identifizierungsinformation dem ersten strukturiert gespeicherten Datensatz und dem zweiten strukturiert gespeicherten Datensatz zugeordnet gespeichert wird.

4. Verfahren nach einem der vorhergehenden Ansprüche, **dadurch gekennzeichnet, dass** bei dem Datenaustausch mit dem ersten Datensatz und/oder zweiten Datensatz zumindest korrelierende Nachrichten zwischen dem Server und dem Client derart ausgetauscht werden, dass für zumindest Teile der in den Nachrichten enthaltenen Informationselemente mit einem asynchronen Verschlüsselungsverfahren, insbesondere dem so genannten "Rivest, Shamir und Adleman"-, RSA-, Verfahren, seitens des Client verschlüsselt werden.

5. Verfahren nach dem vorhergehenden Anspruch, **dadurch gekennzeichnet, dass** durch den Client für jeden neu gebildeten zweiten strukturiert gespeicherten Datensatz ein neues Schlüsselpaar gemäß dem asynchronen Verschlüsselungsverfahren gebildet wird.

6. Verfahren nach einem der vorhergehenden Ansprüche, **dadurch gekennzeichnet, dass** die ersten strukturierten Datensätze und/oder zweiten strukturierten Datensätze derart strukturiert gespeichert werden, dass mit dem ersten strukturierten Datensatz und/oder zweiten strukturierten Datensatz ein zumindest mit einem Zeitbereich korrelierender Wert strukturiert gespeichert wird.

7. Verfahren nach einem der vorhergehenden Ansprüche, **dadurch gekennzeichnet, dass** die ersten strukturierten Datensätze und/oder zweiten strukturierten Datensätze derart strukturiert gespeichert werden, dass mit dem ersten strukturierten Datensatz und/oder zweiten strukturierten Datensatz zumindest ein aus einer zweiten Identifikationsinformation und einer Vergebührungsinformation gebildetes Datenpaar, derart strukturiert gespeichert wird, dass jedes weitere aus einer zweiten Identifikationsinformation und einer Vergebührungsinformation gebildete Paar, als Eintrag einer Liste von aus zweiten Identifikationsinformation und einer Vergebührungsinformation gebildeten Datenpaaren, strukturiert abrufbar gespeichert wird.

8. Verfahren nach dem vorhergehenden Anspruch, **dadurch gekennzeichnet, dass** die Vergebührungsinformation von einer die Vergütungsparameter vorgebenden Einrichtung, beispielsweise, insbesondere dem die API-Funktion bereitstellenden, Server, bezogen wird.

9. Verfahren nach einem der vorhergehenden Ansprüche, **dadurch gekennzeichnet, dass** die erste Nachricht zum Aufruf der API-Funktionalität derart gebildet wird, dass ein Token, insbesondere in der Kopfzeile, der Nachricht zum Aufruf der API-Funktionalität übertragen wird.

10. Verfahren nach einem der vorhergehenden Ansprüche, **dadurch gekennzeichnet, dass** der Token derart gebildet wird, dass er zumindest die erste Identifikationsinformation, den öffentlichen Schlüssel des Clients, den mit dem Zeitbereich zumindest korrelierenden Wert, sowie eine für den durch die zweite Identifikationsinformation bestimmten Eintrag folgenden Eintrag identifizierende gebildete dritte Identifikationsinformation enthält.

11. Verfahren nach dem vorhergehenden Anspruch, **dadurch gekennzeichnet, dass** die zweite Nachricht zur Beantwortung des Aufrufs der APl-Funktionalität derart gebildet wird, dass der zweiten Nachricht die zur ersten Identifikationsinformation zugehörige Vergebührungsinformation und die dritte Identifikationsinformation, insbesondere als Antwort-Token, beigefügt wird, wobei die zweite Nachricht durch den Server mit dem öffentlichen Schlüssel des Clients verschlüsselt an den Client übertragen wird.

12. Verfahren nach einem der vorhergehenden Ansprüche, **dadurch gekennzeichnet, dass** zum ersten Zeitpunkt mit der Anfrage durch den Client
a) der zweiten Datensatz erstellt,
b) die erste Identifizierungsinformation gebildet,
c) als zweite Identifikationsinformation eine den ersten Zeitraum kennzeichnende ID durch einer jeden ersten Zeitraum zugeordneten Information gesetzt,
d) ein Schlüsselpaar gemäß dem asynchronen Verschlüsselungsverfahren gebildet,
e) der zumindest mit dem Zeitbereich korrelierende Wert bestimmt, und/oder
f) der Token erzeugt wird,
g) die erste Nachricht auf Grundlage den zumindest einem der Schritte a) bis f) gebildet und an den Server übertragen wird, und mit der Bereitstellung durch den Server
h) der Token aus der Nachricht extrahiert,
i) der zweite Datensatz erstellt wird,
j) auf Grundlage des mit dem Zeitbereich korrelierenden Wertes, insbesondere als Credits speicherbare, für die bereitgestellte API-Funktionalität ermittelten, Kosteninformation erstellt,
k) eine den nächsten Zeitraum kennzeichnende ID generiert,
l) die Kosteninformation und die den Zeitraum kennzeichnende ID im ersten Datensatz strukturiert gespeichert, und/oder
m) der Antwort-Token erzeugt wird,
m) die zweite Nachricht auf Grundlage zumindest einer der Schritte h) bis I) erzeugt und mit dem öffentlichen Schlüssel des Schlüsselpaares des Clients verschlüsselt übertragen wird, und die zweite Nachricht vom Client,
n) mit dem privaten Schlüssel des Schlüsselpaares entschlüsselt,
o) die Kosteninformation und die durch den nächsten Zeitraum kennzeichnende ID definierte dritte Identifikationsinformation im zweiten Datensatz strukturiert gespeichert wird.

13. Verfahren nach den der vorhergehenden Anspruch, **dadurch gekennzeichnet, dass** für jeden dem ersten Zeitraum folgende Bereitstellung der API-Funktionalität des Servers für den Client, mit der weiteren Anfrage nach der API-Funktionalität im Unterschied zu einem der Schritte a) bis f) in den Token für die erste Nachricht, die durch den nächsten Zeitraum kennzeichnende ID definierte dritte Identifikationsinformation aufgenommen wird.

14. Verfahren nach einem der vorhergehenden Ansprüche, **dadurch gekennzeichnet, dass** seitens des Servers abhängig von einem ersten Triggerereignis, insbesondere dem Empfang einer dritten, eine vom Client an den Server übermittelte, zumindest die Verifikationsanfrage enthaltende, Nachricht,
a) für den der ersten Identifikationsinformation zugeordneten strukturierten Datensatz einen ersten Hash-Code erzeugt,
b) in einer vierten Nachricht den ersten Hash-Code an den Client übermittelt,
c) der Client nach Empfang der vierten Nachricht für den der ersten Identifikationsinformation zugeordneten strukturierten Datensatz einen zweiten Hash-Code erzeugt und den ersten Hash-Code und den zweiten Hash-Code vergleicht und in Abhängigkeit des Vergleichsergebnisses ein zweites Triggerereignis, insbesondere Erzeugen und/oder strukturiertes Speichern einer zumindest mit dem Vergleichsergebnis korrelierenden Validierungsinformation und/oder triggern eines Bezahlprozesses, erzeugt wird.

15. Verfahren nach einem der vorhergehenden Ansprüche, **dadurch gekennzeichnet, dass** seitens des Client abhängig von einem dritten Triggerereignis,
a) einen dritten Hash-Code zu dem der ersten Identifikaitonsinformation zugeordneten zweiten strukturierten Datensatz erzeugt,
b) eine fünfte, zumindest die erste Identifikationsinformation sowie den dritten Hash-Code enthaltende, Nachricht an den Server übermittelt,
c) der Server auf den Empfang der fünften Nachricht zu dem der ersten Identifikationsinformation zugeordneten ersten strukturierten Datensatz einen vier Hash-Code erzeugt und den dritten Hash-Code und den vergleich Hash-Code vergleicht und in Abhängigkeit des Vergleichsergebnisses ein vierten Triggerereignis, insbesondere Erzeugen und/oder strukturiertes Speichern einer zumindest mit dem Vergleichsergebnis korrelierenden Validierungsinformation und/oder triggern eines Bezahlprozesses, erzeugt wird.

16. Servereinerichtung **gekennzeichnet durch** Mittel zur Durchführung des Verfahrens zur automatischen Vergebührungsdatenerstellung zur Vergebührung von zumindest einer seitens der Servereinrichtung zumindest einem Client zumindest für einen ersten Zeitraum bereitgestellten so genannten "Application Programming Interface, "API"-, Funktion, nach einem der vorhergehenden Ansprüche.

17. Clienteinrichtung **gekennzeichnet durch** Mittel zur Durchführung des Verfahrens zur automatischen Vergebührungsdatenerstellung zur Vergebührung von zumindest einer seitens der Servereinrichtung zumindest einem Client zumindest für einen ersten Zeitraum bereitgestellten so genannten "Application Programming Interface, "API"-, Funktion, nach einem der vorhergehenden Ansprüche 1 bis 15.
